(19) Europäisches Patentamt
European Patent Office
Office européen des brevets

(11) **EP 4 067 148 A1**

(12) **EUROPEAN PATENT APPLICATION**
published in accordance with Art. 153(4) EPC

(43) Date of publication:
**05.10.2022 Bulletin 2022/40**

(21) Application number: **20891547.0**

(22) Date of filing: **16.11.2020**

(51) International Patent Classification (IPC):
**B60K 35/00** (2006.01)  **G02B 27/01** (2006.01)
**G02B 30/00** (2020.01)  **H04N 13/128** (2018.01)
**H04N 13/305** (2018.01)  **H04N 13/31** (2018.01)
**H04N 13/346** (2018.01)  **H04N 13/363** (2018.01)
**H04N 13/366** (2018.01)

(52) Cooperative Patent Classification (CPC):
**B60K 35/00; G02B 27/01; G02B 30/00;**
**H04N 13/128; H04N 13/305; H04N 13/31;**
**H04N 13/346; H04N 13/363; H04N 13/366**

(86) International application number:
**PCT/JP2020/042681**

(87) International publication number:
**WO 2021/106663 (03.06.2021 Gazette 2021/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.11.2019 JP 2019214704**

(71) Applicant: **Kyocera Corporation
Kyoto-shi Kyoto 612-8501 (JP)**

(72) Inventors:
• **KUSAFUKA, Kaoru**
  **Kyoto-shi, Kyoto 612-8501 (JP)**
• **MURATA, Mitsuhiro**
  **Kyoto-shi, Kyoto 612-8501 (JP)**
• **HASHIMOTO, Sunao**
  **Kyoto-shi, Kyoto 612-8501 (JP)**

(74) Representative: **TBK
Bavariaring 4-6
80336 München (DE)**

(54) **HEAD-UP DISPLAY MODULE, HEAD-UP DISPLAY SYSTEM, AND MOVING BODY**

(57)     A head-up display module is mountable on a movable body. The head-up display module includes a first display panel, a first optical element, a drive, a first input unit, and a controller. The first display panel displays a first image. The first optical element reflects image light from the first image emitted from the first display panel. The drive drives the first optical element to change a direction in which the image light from the first image is reflected. The first input unit receives an input of a speed of the movable body. The controller drives the drive in accordance with the speed and controls a display image to be displayed on the first display panel.

FIG. 1

**Description**

**FIELD**

The present disclosure relates to a head-up display module, a head-up display system, and a movable body.

**BACKGROUND**

A known technique is described in, for example, Patent Literature 1.

**CITATION LIST**

**PATENT LITERATURE**

Patent Literature 1: Japanese Unexamined Patent Application Publication No. 2017-202721

**BRIEF SUMMARY**

A head-up display module according to an aspect of the present disclosure is mountable on a movable body. The head-up display module includes a first display panel, a first optical element, a drive, a first input unit, and a controller. The first display panel displays a first image. The first optical element reflects image light from the first image emitted from the first display panel. The drive drives the first optical element to change a direction in which the image light from the first image is reflected. The first input unit receives an input of a speed of the movable body. The controller drives the drive in accordance with the speed and controls a display image to be displayed on the first display panel.

A head-up display system according to another aspect of the present disclosure includes a head-up display module and a second optical element. The head-up display module is mountable on a movable body. The head-up display module includes a first display panel, a first optical element, a drive, a first input unit, and a controller. The first display panel displays a first image. The first optical element reflects image light from the first image emitted from the first display panel. The drive drives the first optical element to change a direction in which the image light from the first image is reflected. The first input unit receives an input of a speed of the movable body. The controller drives the drive in accordance with the speed and controls a display image to be displayed on the first display panel. The second optical element reflects, toward a user, the image light from the first image reflected by the first optical element.

A head-up display system according to another aspect of the present disclosure includes a head-up display module mountable on a movable body and a second optical element. The head-up display module includes a first display panel, a first optical element, a drive, a first input unit, a controller, and a second display panel. The first display panel displays a first image. The first optical element reflects image light from the first image emitted from the first display panel. The drive drives the first optical element to change a direction in which the image light from the first image is reflected. The first input unit receives an input of a speed of the movable body. The controller drives the drive in accordance with the speed and controls a display image to be displayed on the first display panel. The controller stores a plurality of display items to be displayed, displays at least one of the plurality of display items on the second display panel in response to the speed being less than a predetermined value, and displays all of the plurality of display items on the first display panel in response to the speed being greater than or equal to the predetermined value. The second optical element reflects, toward a user, the image light from the first image reflected by the first optical element and image light from a second image emitted from the second display panel.

A movable body according to another aspect of the present disclosure includes a head-up display system. The head-up display system includes a head-up display module and a second optical element. The head-up display module includes a first display panel, a first optical element, a drive, a first input unit, and a controller. The first display panel displays a first image. The first optical element reflects image light from the first image emitted from the first display panel. The drive drives the first optical element to change a direction in which the image light from the first image is reflected. The first input unit receives an input of a speed. The controller drives the drive in accordance with the speed and controls a display image to be displayed on the first display panel. The second optical element reflects, toward a user, the image light from the first image reflected by the first optical element.

**BRIEF DESCRIPTION OF DRAWINGS**

The objects, features, and advantages of the present disclosure will become more apparent from the following detailed description and the drawings.

FIG. 1 is a schematic diagram of an example head-up display (HUD) system mounted on a movable body.

FIG. 2 is a diagram of an example display panel shown in FIG. 1 viewed in a depth direction.

FIG. 3 is a diagram of an example parallax optical element shown in FIG. 1 viewed in the depth direction.

FIG. 4 is a diagram describing the relationship between a virtual image and user's eyes shown in FIG. 1.

FIG. 5 is a diagram showing an area viewable with a left eye in the virtual image for the display panel.

FIG. 6 is a diagram showing an area viewable with a right eye in the virtual image for the display panel.

FIG. 7 is a diagram describing switching of the parallax optical element in response to a change in the positions of the user's eyes.

FIG. 8 is a diagram of an example display performed by the HUD system in FIG. 1.

FIG. 9 is a schematic diagram of an example HUD system including two display devices.

FIG. 10 is a diagram of an example display performed by the HUD system in FIG. 9.

FIG. 11 is a diagram of another example display performed by the HUD system in FIG. 9.

## DETAILED DESCRIPTION

As a head-up display (HUD) system with the structure that forms the basis of a HUD system according to one or more embodiments of the present disclosure, a known HUD system displays, for example, an image of a speedometer superimposed on a predetermined position in a frontward view as viewed from a driver.

The HUD system on a movable body is to display an image at an appropriate position in accordance with the speed of the movable body.

One or more embodiments of the present disclosure are directed to a HUD module, a HUD system, and a movable body incorporating the HUD module and the HUD system that can display an image at an appropriate position in accordance with the speed of the movable body.

One or more embodiments of the present disclosure will now be described with reference to the drawings. The drawings used herein are schematic and are not drawn to scale relative to the actual size of each component.

Head-Up Display System

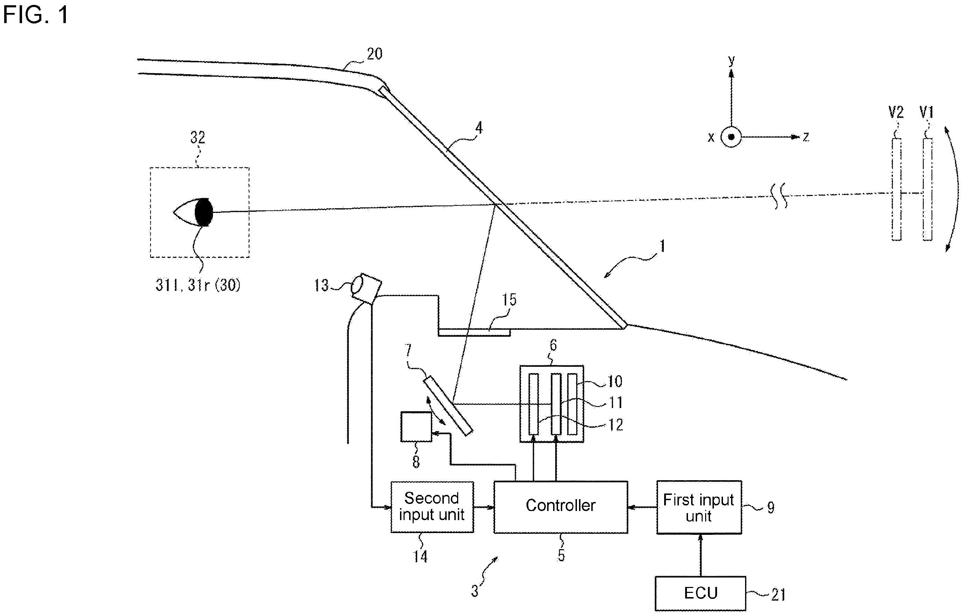

As shown in FIG. 1, a head-up display system 1 according to an embodiment of the present disclosure includes a head-up display module 3 and a reflective optical element 4. The reflective optical element 4 is a second optical element. The head-up display system 1 is hereafter also referred to as a HUD system 1. The head-up display module 3 is hereafter also referred to as a HUD module 3. The HUD system 1 may be mounted on a movable body 20. The HUD system 1 mounted on the movable body 20 displays an image for a user 30 aboard the movable body 20. An image projected by the HUD system 1 is referred to as a first image.

FIG. 1 shows the HUD system 1 mounted on the movable body 20. In FIG. 1, x-direction refers to an interocular direction of the user 30, or the direction along a line passing through a left eye 311 and a right eye 31r of the user 30, z-direction refers to the front-rear direction as viewed from the user 30, and y-direction refers to the height direction orthogonal to x-direction and z-direction.

The movable body according to one or more embodiments of the present disclosure includes a vehicle, a vessel, or an aircraft. The vehicle according to one or more embodiments of the present disclosure includes, but is not limited to, an automobile or an industrial vehicle, and may also include a railroad vehicle, a community vehicle, or a fixed-wing aircraft traveling on a runway. The automobile includes, but is not limited to, a passenger vehicle, a truck, a bus, a motorcycle, or a trolley bus, and may also include another vehicle traveling on a road. The industrial vehicle includes an agricultural vehicle or a construction vehicle. The industrial vehicle includes, but is not limited to, a forklift or a golf cart. The agricultural vehicle includes, but is not limited to, a tractor, a cultivator, a transplanter, a binder, a combine, or a lawn mower. The construction vehicle includes, but is not limited to, a bulldozer, a scraper, a power shovel, a crane vehicle, a dump truck, or a road roller. The vehicle includes a man-powered vehicle. The classification of the vehicle is not limited to the above. For example, the automobile may include an industrial vehicle traveling on a road, and one type of vehicle may fall within a plurality of classes. The vessel according to one or more embodiments of the present disclosure includes a jet ski, a boat, or a tanker. The aircraft according to one or more embodiments of the present disclosure includes a fixed-wing aircraft or a rotary-wing aircraft. Structure of Head-Up Display Module

The HUD module 3 includes a controller 5, a display device 6, a mirror 7, a drive 8, and a first input unit 9. The mirror 7 is a first optical element. The structure of each component of the HUD module 3 will now be described.

The controller 5 is connected to each of the components of the HUD module 3 to control these components. The controller 5 may be, for example, a processor. The controller 5 may include one or more processors. The processors may include a general-purpose processor that reads a specific program to perform a specific function, and a processor dedicated to specific processing. The dedicated processor may include an application-specific integrated circuit (ASIC). The processor may include a programmable logic device (PLD). The PLD may include a field-programmable gate array (FPGA). The controller 5 may be either a system on a chip (SoC) or a system in a package (SiP) in which one or more processors cooperate with other components.

The controller 5 includes a memory. The memory includes any storage device such as a random-access memory (RAM) or a read-only memory (ROM). The memory may store any programs and information for various processes. For example, the memory may store, as the first image, display any of display items. Examples of the display items include text, graphics, and animations combining text and graphics.

The display device 6 includes an illuminator 10 and a first display panel 11. The display device 6 emits image light from the first image displayed on the first display panel 11. The controller 5 controls a display image on the first display panel 11. For the HUD module 3 that can project a parallax image viewable as a three-dimensional (3D) image for the user 30, the display device 6 may further include a parallax optical element 12. For the HUD module 3 that projects an image viewable as a two-dimensional (2D) image alone for the user 30, the parallax optical element 12 may be eliminated. The structure including the HUD module 3 that can display a parallax image will be described in detail later.

The mirror 7 reflects image light from the first image emitted by the display device 6 toward the reflective optical element 4. The mirror 7 may be a concave mirror with a predetermined positive refractive index. The mirror 7 with a predetermined positive refractive index causes the first image on the first display panel 11 to be projected as an enlarged virtual image at a position farther than the reflective optical element 4 in the field of view of the user 30.

The drive 8 drives the mirror 7 to change the direction in which image light from the first image is reflected. Thus, the mirror 7 may be rotatable about a predetermined rotation axis or rotation center. The mirror 7 is rotatable and may also be translatable. The drive 8 changes both or either of the tilt and the position of the mirror 7 to change the position at which the first image is projected on the reflective optical element 4. The controller 5 may control the drive 8. The drive 8 may include, for example, a stepper motor.

The first input unit 9 may receive an input of the speed of the movable body 20 from, for example, an electronic control unit (ECU) 21. The ECU 21 is a computer that electronically controls various devices mounted on the movable body 20. For the movable body 20 being a vehicle, the ECU 21 may obtain a vehicle speed pulse signal detected by a vehicle speed sensor. The first input unit 9 can receive a vehicle speed signal representing the vehicle speed from the ECU 21.

The structure of the HUD module 3 that can display a parallax image will now be described.

The illuminator 10 illuminates the first display panel 11 with planar illumination light. The illuminator 10 may include a light source, a light guide plate, a diffuser plate, and a diffuser sheet. The illuminator 10 spreads illumination light emitted from its light source uniformly to illuminate the surface of the first display panel 11. The illuminator 10 can emit illumination light to be substantially uniform through, for example, the light guide plate, the diffuser plate, and the diffuser sheet. The illuminator 10 may emit the uniform light toward the first display panel 11.

The first display panel 11 may be, for example, a transmissive liquid crystal display panel. The first display panel 11 is not limited to a transmissive liquid crystal panel but may be a self-luminous display panel. The self-luminous display panel may be, for example, an organic electroluminescent (EL) display or an inorganic EL display. For the first display panel 11 being a self-luminous display panel, the display device 6 may not include the illuminator 10.

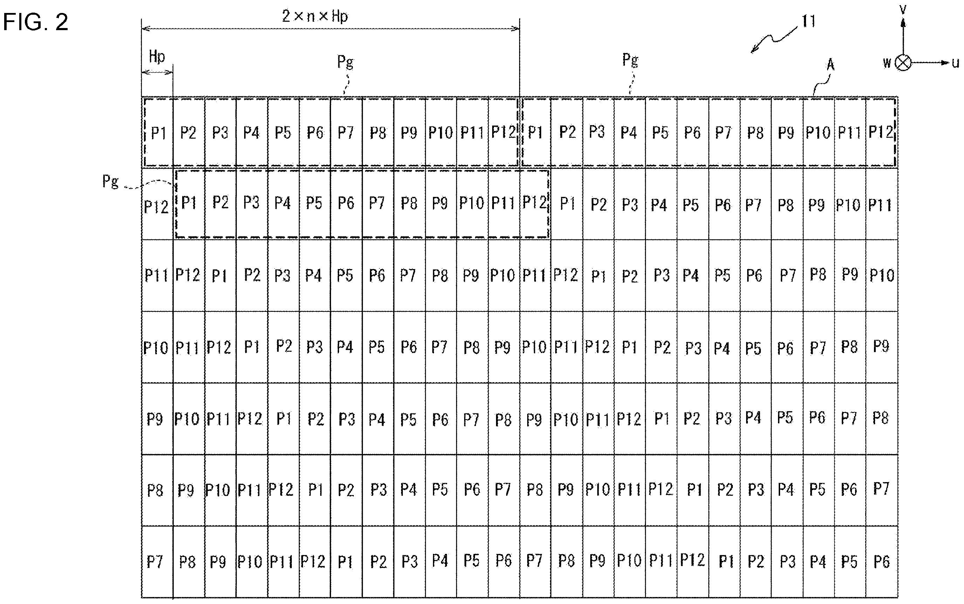

As shown in FIG. 2, the first display panel 11 includes a planar active area A including multiple divisional areas. The active area A can display a parallax image. The parallax image includes a left eye image and a right eye image (described later). The right eye image has parallax with respect to the left eye image. In FIG. 2, the divisional areas are defined in u-direction and in v-direction orthogonal to u-direction. The direction orthogonal to u-direction and v-direction is referred to as w-direction. The u-direction may be referred to as a horizontal direction. The v-direction may be referred to as a vertical direction. The w-direction may be referred to as a depth direction. The u-direction is the direction corresponding to the parallax direction of the user 30.

Each divisional area corresponds to a subpixel. Thus, the active area A includes multiple subpixels arranged in a lattice in u-direction and v-direction. Each subpixel has one of the colors red (R), green (G), and blue (B). One pixel may be a set of three subpixels with R, G, and B. One pixel may include four or any other number of subpixels, instead of three subpixels. One pixel may include subpixels with a combination of colors different from R, G, and B. A pixel may be referred to as a picture element. For example, multiple subpixels included in one pixel may be arranged in the horizontal direction. Multiple subpixels having the same color may be arranged, for example, in the vertical direction.

The multiple subpixels arranged in the active area A form multiple subpixel groups Pg under control by the controller 5. The multiple subpixel groups Pg are arranged repeatedly in u-direction. Each subpixel group Pg may be aligned with or shifted from the corresponding subpixel group Pg in v-direction. For example, the subpixel groups Pg are repeatedly arranged in v-direction at positions shifted by one subpixel in u-direction from the corresponding subpixel group Pg in adjacent rows. The subpixel groups Pg each include multiple subpixels in predetermined rows and columns. More specifically, the multiple subpixel groups Pg each include $(2 \times n \times b)$ subpixels P1 to PN ($N = 2 \times n \times b$), which are consecutively arranged in b rows in v-direction and in $(2 \times n)$ columns in u-direction. In the example shown in FIG. 2, n is 6, and b is 1. The active area A shown in FIG. 2 includes the subpixel groups Pg each including 12 subpixels P1 to P12 consecutively arranged in one row in v-direction and in 12 columns in u-direction. In the example shown in FIG.

2, some of the subpixel groups Pg are denoted by reference signs.

Each subpixel group Pg is the smallest unit controllable by the controller 5 to display an image. The subpixels included in each subpixel group Pg are identified using identification reference signs P1 to PN (N = 2 × n × b). The subpixels P1 to PN (N = 2 × n × b) included in each subpixel group Pg with the same identification reference signs are controlled by the controller 5 at the same time. Being controlled at the same time includes being controlled simultaneously and substantially simultaneously. Being controlled at the same time includes being controlled based on the same single clock and in the same frame. For example, the controller 5 can switch the image to be displayed by the subpixels P1 from the left eye image to the right eye image at the same time in all the subpixel groups Pg.

As shown in FIG. 1, the parallax optical element 12 extends along the first display panel 11. The parallax optical element 12 is separate from the active area A in the first display panel 11 by a gap g, or a distance. The parallax optical element 12 may be located opposite to the illuminator 10 from the first display panel 11. The parallax optical element 12 may be located between the first display panel 11 and the illuminator 10.

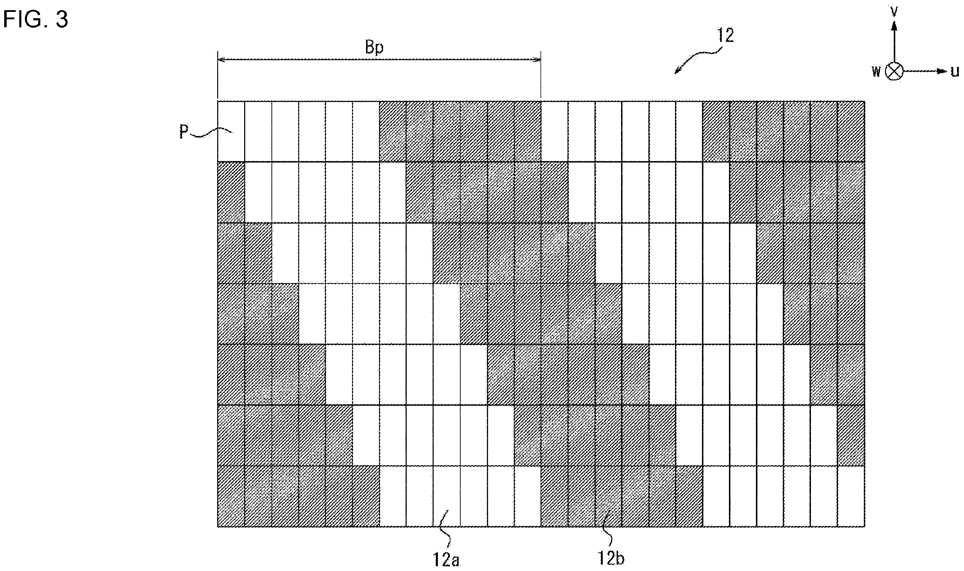

The parallax optical element 12 can define the traveling direction of image light emitted from the multiple subpixels. The parallax optical element 12 can substantially define a viewing zone 32 for a parallax image. The viewing zone 32 is the range of space from which the left eye 31l and the right eye 31r of the user 30 can view the parallax image as a 3D image. In one example, the parallax optical element 12 is a liquid crystal shutter as shown in FIG. 3. Similarly to the first display panel 11, the liquid crystal shutter includes multiple pixels P. The parallax optical element 12 being a liquid crystal shutter can control the light transmittance of each pixel P. Each pixel P in the parallax optical element 12 can switch between a high light-transmittance state and a low light-transmittance state. A pixel P with a higher light transmittance may be hereafter referred to as an open pixel. The multiple pixels P included in the parallax optical element 12 may correspond to the multiple subpixels included in the first display panel 11. The multiple pixels P in the parallax optical element 12 differ from the subpixels in the first display panel 11 in that the pixels P have no color components.

The parallax optical element 12 includes multiple transmissive portions 12a and multiple light-reducing portions 12b as controlled by the controller 5. For the parallax optical element 12 being a liquid crystal shutter, the transmissive portions 12a include pixels P with a higher light transmittance, and the light-reducing portions 12b include pixels P with a lower light transmittance. The light-reducing portions 12b are strip areas extending in a predetermined direction in the plane of the parallax optical element 12. The light-reducing portions 12b define transmissive portions 12a between adjacent light-reducing portions 12b. The transmissive portions 12a and the light-reducing portions 12b extend in a predetermined direction along the active area A. The transmissive portions 12a and the light-reducing portions 12b are arranged alternately in a direction orthogonal to the predetermined direction. The transmissive portions 12a have a higher light transmittance than the light-reducing portions 12b. The transmissive portions 12a may have a light transmittance 10 or more times, or 100 or more times, or 1000 or more times the light transmittance of the light-reducing portions 12b. The light-reducing portions 11b have a lower light transmittance than the transmissive portions 12a. The light-reducing portions 12b may block image light.

The direction in which the transmissive portions 12a and the light-reducing portions 12b extend may correspond to the direction in which the subpixel groups Pg in the first display panel 11 are arranged. The parallax optical element 12 is controlled to simultaneously cause subpixels in the subpixel groups Pg identified with the same identification reference signs P1 to P12 to be light-transmissive or light-reducing as viewed with the left eye 31l and the right eye 31r of the user 30.

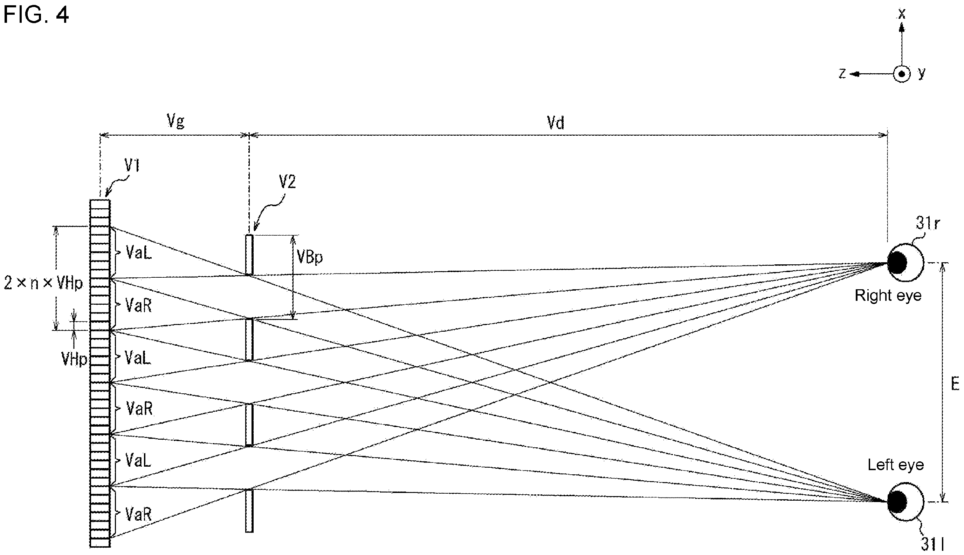

Image light from the first image emitted from the active area A on the first display panel 11 partially transmits through the transmissive portions 12a and reaches the reflective optical element 4 through the mirror 7. The image light reaching the reflective optical element 4 is reflected by the reflective optical element 4 and reaches the left eye 31l and the right eye 31r of the user 30. This allows the left eye 31l and the right eye 31r of the user 30 to view, as a virtual image of an image appearing on the active area A, a first virtual image V1 frontward from the reflective optical element 4. Being frontward herein refers to z-direction. As shown in FIG. 4, the user 30 perceives an image including a second virtual image V2 that is a virtual image of the parallax optical element 12 appearing to define the direction of image light from the first virtual image V1.

The user 30 thus views the image appearing as the first virtual image V1 through the second virtual image V2. In reality, the user 30 does not view the second virtual image V2, or a virtual image of the parallax optical element 12. However, the second virtual image V2 is hereafter referred to as appearing at the position at which the virtual image of the parallax optical element 12 is formed and as defining the traveling direction of image light from the first virtual image V1. Areas in the first virtual image V1 viewable to the user 30 with image light reaching the position of the left eye 31l of the user 30 are hereafter referred to as left viewable areas VaL. Areas in the first virtual image V1 viewable to the user 30 with image light reaching the position of the right eye 31r of the user 30 are referred to as right viewable areas VaR.

As shown in FIG. 4, a virtual image barrier pitch VBp and a virtual image gap Vg are determined to satisfy Formula 1 and Formula 2 below using an optimum viewing distance Vd.

$$E{:}Vd = (n \times VHp){:}Vg \qquad (1)$$

$$Vd{:}VBp = (Vdv + Vg){:}(2 \times n \times VHp) \qquad (2)$$

The virtual image barrier pitch VBp is the interval in x-direction at which the light-reducing portions 12b projected as the second virtual image V2 are arranged in a direction corresponding to u-direction. The virtual image gap Vg is the distance between the second virtual image V2 and the first virtual image V1. The optimum viewing distance Vd is the distance between the position of the left eye 31l or the right eye 31r of the user 30 and the second virtual image V2, or a virtual image of the parallax optical element 12. An interocular distance E is the distance between the left eye 31l and the right eye 31r. The interocular distance E may be, for example, 61.1 to 64.4 mm, as calculated through studies conducted by the National Institute of Advanced Industrial Science and Technology. VHp is the horizontal length of each subpixel of the virtual image. VHp is the length of each subpixel of the first virtual image V1 in a direction corresponding to x-direction.

As described above, the left viewable areas VaL in FIG. 4 are defined on the first virtual image V1 and viewable with the left eye 31l of the user 30 when image light transmitted through the transmissive portions 12a of the parallax optical element 12 reaches the left eye 31l of the user 30. As described above, the right viewable areas VaR are defined on the first virtual image V1 and viewable with the right eye 31r of the user 30 when image light transmitted through the transmissive portions 12a of the parallax optical element 12 reaches the right eye 31r of the user 30.

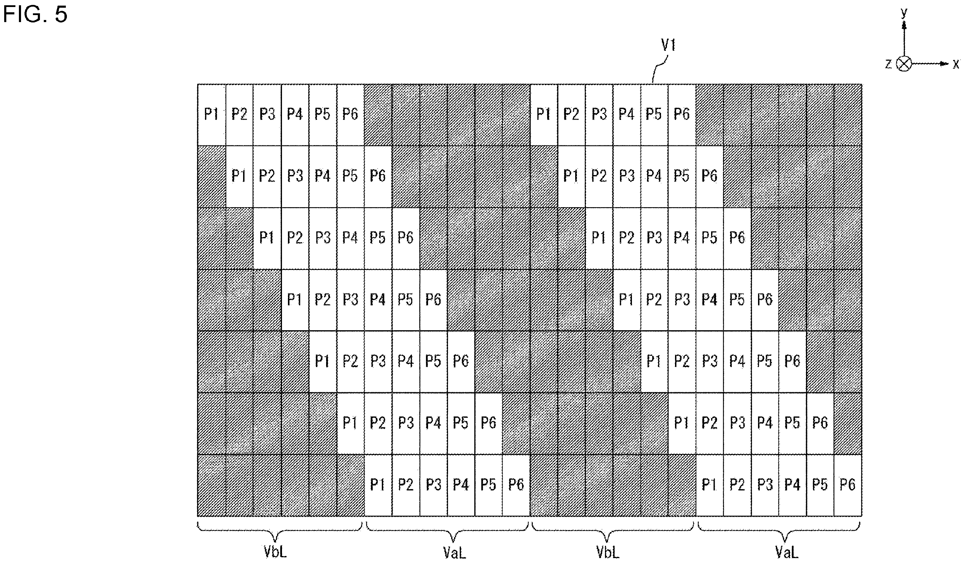

FIG. 5 shows an example array of subpixels of the first virtual image V1 as viewed with the left eye 31l of the user 30 using the parallax optical element 12 with an aperture ratio of 50%. The subpixels on the first virtual image V1 are denoted by the same identification reference signs P1 to P12 as the subpixels shown in FIG. 2. The parallax optical element 12 with an aperture ratio of 50% includes the transmissive portions 12a and the light-reducing portions 12b each having the same width in the interocular direction (x-direction). The first virtual image V1 includes left light-reducing areas VbL with light reduced by the second virtual image V2. The left light-reducing areas VbL are less easily viewable with the left eye 31l of the user 30 when the image light is reduced by the light-reducing portions 12b on the parallax optical element 12.

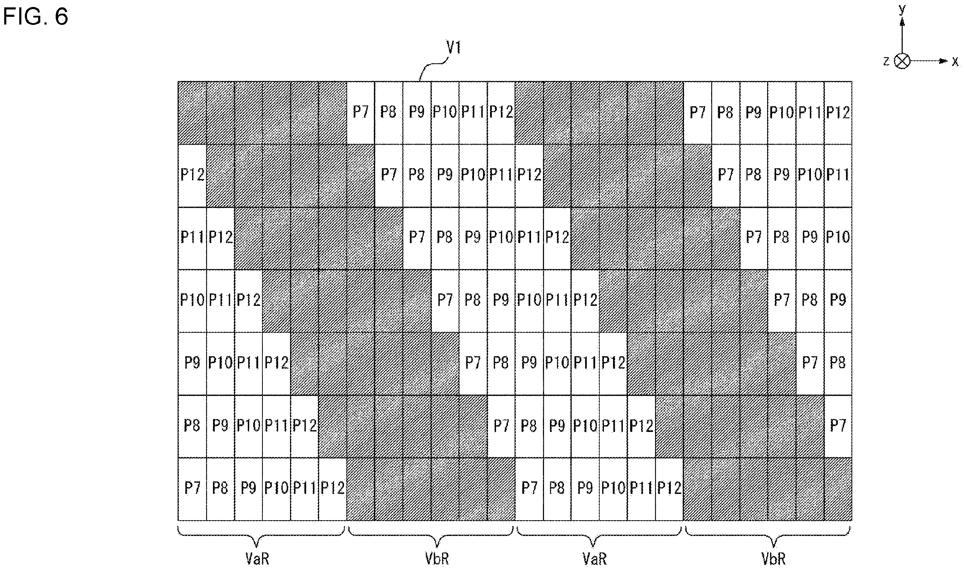

FIG. 6 shows an example array of subpixels of the first virtual image V1 viewed with the right eye 31r of the user 30 when the left viewable areas VaL and the left light-reducing areas VbL located as shown in FIG. 5 are viewed with the left eye 31l of the user 30. The first virtual image V1 includes right light-reducing areas VbR with light reduced by the second virtual image V2. The right light-reducing areas VbR are less easily viewable with the right eye 31r of the user 30 when the image light is reduced by the light-reducing portions 12b on the parallax optical element 12.

With the parallax optical element 12 having an aperture ratio of 50%, the left viewable areas VaL may match the right light-reducing areas VbR, and the right viewable areas VaR may match the left light-reducing areas VbL. With the parallax optical element 12 having an aperture ratio of less than 50%, the left viewable areas VaL can include the right light-reducing areas VbR, and the right viewable areas VaR can include the left light-reducing areas VbL. Thus, the right viewable areas VaR are not easily viewable with the left eye 31l, and the left viewable areas VaL are not easily viewable with the right eye 31r.

In the example shown in FIGs. 5 and 6, each left viewable area VaL includes the virtual image of each of the subpixels P1 to P6 arranged in the active area A. The virtual image of the subpixels P7 to P12 arranged in the active area A is less easily viewable with the left eye 31l of the user 30. Each right viewable area VaR includes the virtual image of each of the subpixels P7 to P12 arranged in the active area A. The virtual image of the subpixels P1 to P6 arranged in the active area A is less easily viewable with the right eye 31r of the user 30. The controller 5 can cause the subpixels P1 to P6 to display the left eye image. The controller 5 can cause the subpixels P7 to P12 to display the right eye image. This allows the left eye 31l of the user 30 to view the virtual image of the left eye image on the left viewable areas VaL and allows the right eye 31r of the user 30 to view the virtual image of the right eye image on the right viewable areas VaR. As described above, the right eye image and the left eye image are parallax images having parallax between them. The user 30 can thus view the right eye image and the left eye image as a 3D image.

A change in the positions of the eyes 31 of the user 30 changes the parts of the subpixels P1 to P12 used to display the virtual image viewable with the left eye 31l and the right eye 31r of the user 30. The HUD system 1 may further include a detector 13 for detecting the positions of the left eye 31l and the right eye 31r of the user 30. The detector 13 outputs the detected positions of the left eye 31l and the right eye 31r of the user 30 to the controller 5. The detector 13 may include an imaging device or a sensor. For the HUD system 1 mounted on the movable body 20 being a vehicle, the detector 13 may be installed in any of various places such as on a rearview mirror, an instrument panel, a steering wheel, or a dashboard.

For the detector 13 including an imaging device, the imaging device captures a subject and generates an image of the subject. The imaging device includes an image sensor. The image sensor may include, for example, a charge-coupled device (CCD) image sensor or a complementary metal-oxide-semiconductor (CMOS) image sensor. The imaging device is arranged to have the face of the user 30 being at the position of the subject. For example, the detector 13 may define a predetermined position as the origin and detect the direction and amount of displacements of the positions of the eyes 31 from the origin. The detector 13 may detect, with two or more imaging devices, the position of at least one of the left eye 31l and the right eye 31r as the coordinates in a 3D space.

The detector 13 may include no imaging device and may be connected to an external imaging device. The detector 13 may include an input terminal for receiving signals from the external imaging device. The external imaging device may be directly connected to the input terminal. The external imaging device may be connected to the input terminal indirectly through a shared network.

For the detector 13 including a sensor, the sensor may be an ultrasonic sensor or an optical sensor.

The HUD module 3 may include a second input unit 14 that can obtain, as positional information, the positions of the eyes 31 of the user 30 from the detector 13. The controller 5 may obtain positional information about the left eye 31l and the right eye 31r of the user 30 from the detector 13 through the second input unit 14. The detector 13 and the second input unit 14 are connected to each other through wired or wireless communication or both. For the movable body 20 being a vehicle, the detector 13 and the second input unit 14 may be connected to each other with a vehicle network such as a controller area network (CAN). The second input unit 14 may include a connector for wired communication, such as an electrical connector or an optical connector. The second input unit 14 may include an antenna for wireless communication.

The controller 5 controls, based on the position of the left eye 31l of the user 30, the parallax optical element 12 to allow the subpixels P1 to P6 displaying the left eye image to be viewed with the left eye 31l. The controller 5 controls, based on the position of the right eye 31r of the user 30, the parallax optical element 12 to cause the subpixels P7 to P12 displaying the right eye image to be viewed with the right eye 31r.

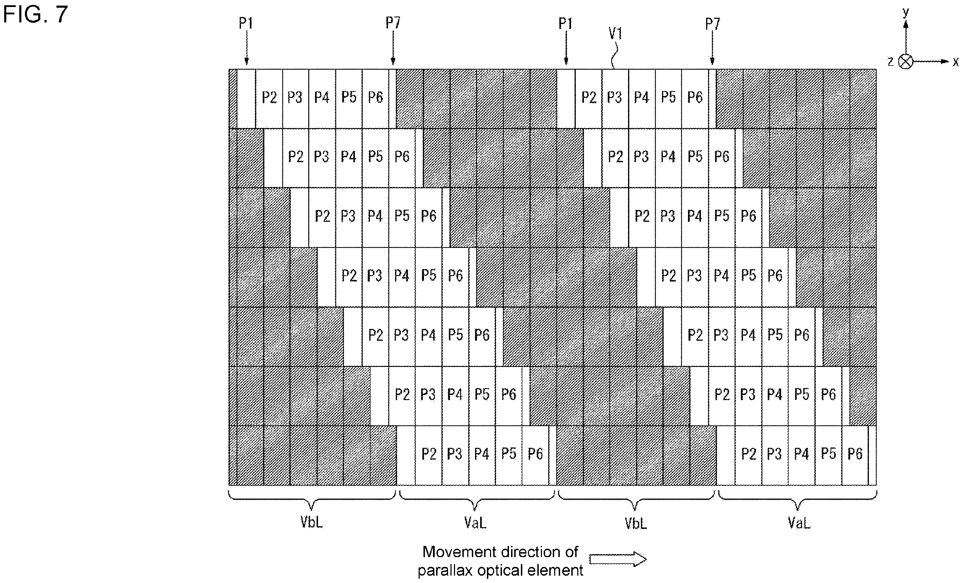

For example, the left eye 31l and the right eye 31r of the user 30 observing the first virtual image V1 as shown in FIGs. 5 and 6 may move relatively to the left. This causes the second virtual image V2 that is a virtual image of the parallax optical element 12 to appear to move to the right. FIG. 7 shows the first virtual image V1 when the left eye 31l of the user 30 has moved to the left from the state shown in FIG. 5. As the left eye 31l of the user 30 moves to the left, the left viewable areas VaL and the left light-reducing areas VbL move to the right.

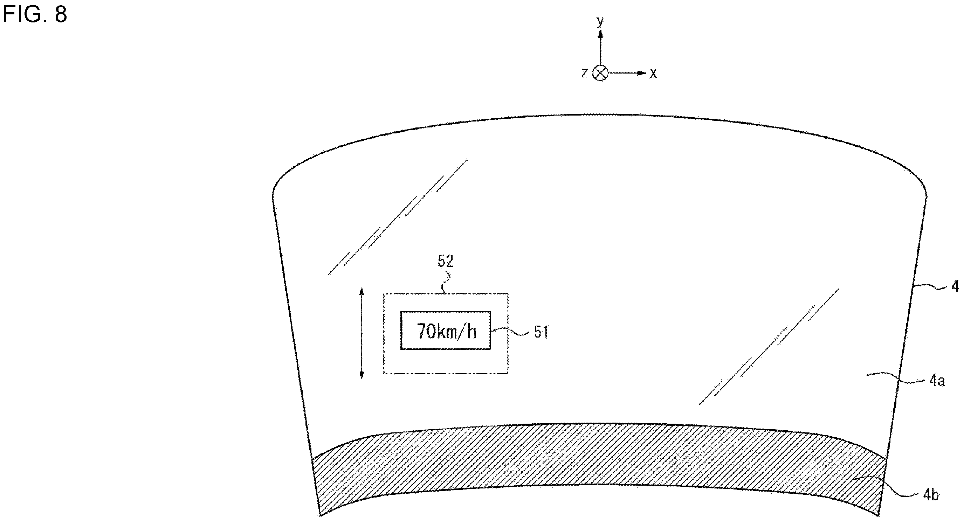

In the example shown in FIG. 7, each left viewable area VaL includes the entire part of each of the subpixels P2 to P6 and a part of each of the subpixels P1 and P7. Each right viewable area VaR includes the entire part of each of the subpixels P8 to P12 and a part of each of the subpixels P7 and P1. The controller 5 controls the parallax optical element 12 to cause each left viewable area VaL to include the largest part of each of the subpixels P1 to P6 displaying the left eye image. For example, in response to the left eye 31l of the user 30 moving further to the left in the state shown in FIG. 8, causing each left viewable area VaL to include a larger part of each subpixel P7 than the part of each subpixel P1 included, the controller 5 may switch open pixels P in the parallax optical element 12. In this case, the controller 5 switches, to open pixels, pixels with a lower light transmittance in the parallax optical element 12 for which virtual images are located adjacent to the left of the left viewable areas VaL. The controller 5 switches, to pixels with a lower light transmittance, open pixels in the parallax optical element 12 for which virtual images are located adjacent to the left of the left light-reducing areas VbL. The controller 5 switches open pixels P to maintain the subpixels P1 to P6 displaying the left eye image to be most easily viewable with the left eye 31l of the user 30. The controller 5 controls the parallax optical element 12 for the right eye 31r in the same manner.

In some embodiments, the parallax optical element 12 may have an aperture ratio of less than 50%. When, for example, one subpixel group Pg in the active area A includes 12 subpixels P1 to P12 as in FIG. 2, the controller 5 may control one subpixel group Pg to constantly include five subpixels with a higher light transmittance. In the state in FIG. 7, the controller 5 may control the parallax optical element 12 to add another pixel P with a lower light transmittance to the left of each left light-reducing area VbL to reduce image light from the subpixel P7.

In one of multiple embodiments, the HUD module 3 may be switchable, for the user 30, between a first state for displaying a 3D image and a second state for displaying a 2D image in the manner described above. In the first state, the controller 5 displays a parallax image on the first display panel 11 and displays, on the parallax optical element 12, the transmissive portions 12a and the light-reducing portions 12b for defining the traveling direction of image light. In the second state, the controller 5 displays a 2D image representing a 2D image on the first display panel 11 and causes the parallax optical element 12 to be entirely in a light transmission state to transmit image light uniformly. The controller 5 performs control to synchronize the switching of the states of the first display panel 11 and the parallax optical element 12. This allows the HUD module 3 to select either a 2D image or a 3D image as appropriate and display the image for the user 30.

The HUD system 1 may include a glass cover 15 for protecting the HUD module 3 between the HUD module 3 and the reflective optical element 4. The glass cover 15 may be a flat glass plate or a curved glass plate.

Reflective Optical Element

The reflective optical element 4 reflects at least a part of the first image. The reflective optical element 4 reflects, toward the viewing zone 32 of the user 30, image light from the first image emitted from the HUD module 3. The HUD system 1 mounted on the movable body 20 being a vehicle may use a windshield of the vehicle as the reflective optical element 4.

With the HUD module 3 in operation, the reflective optical element 4 can cause a first image 51 to appear in the field of view of the user 30 as shown in FIG. 8. The first image 51 appears in a first image display area 52. The first image display area 52 is an area on the reflective optical element 4 onto which an image displayed on the first display panel 11 can be projected.

As shown in FIG. 8, the reflective optical element 4 may include a first reflective area 4a that reflects a part of incident light and transmits another part of the incident light. The HUD system 1 may display the first image on the first reflective area 4a in a manner superimposed on the background frontward from the reflective optical element 4. The reflective optical element 4 may include a second reflective area 4b that reflects a part of incident light and substantially blocks another part of the incident light. In the HUD system 1 mounted on the movable body 20 being a vehicle, the windshield may include a lower black portion as the second reflective area 4b. The lower black portion of the windshield may be referred to as a black ceramic portion. An image projected onto the second reflective area 4b can appear clearly in the field of view of the user 30 without being superimposed on the background located in the depth direction from the reflective optical element 4. The second reflective area 4b in the movable body 20 may be usable for displaying information from measuring instruments such as a speedometer, a tachometer, or a direction indicator, which may be located on an instrument panel in a known movable body.

Display of First Image

A method for displaying the first image with the controller 5 will now be described. The controller 5 drives the drive 8 in accordance with the speed of the movable body 20 input through the first input unit 9. The controller 5 controls the position of a display image displayed on the first display panel 11 in accordance with the speed of the movable body 20. The controller 5 drives the drive 8 to orient or move the mirror 7 and thus change the position of the first image display area 52.

For example, the controller 5 controls the drive 8 to cause the mirror 7 to reflect image light more upward as the speed of the movable body 20 increases. This causes the first image 51 together with the first image display area 52 to move upward on the reflective optical element 4 within the field of view of the user 30. The controller 5 controls the drive 8 to cause the mirror 7 to reflect image light less upward, or to be oriented upward at a smaller angle, as the speed of the movable body 20 decreases. This causes the first image 51 together with the first image display area 52 to move downward on the reflective optical element 4 within the field of view of the user 30.

The user 30 is more likely to direct the gaze farther at a higher speed of the movable body 20. The gaze direction of the user 30 thus shifts upward. The user 30 can view the first image 51 viewable at a more upward position without moving the gaze greatly. The user 30 is more likely to direct the gaze toward an object located closer, such as a road surface, as the speed of the movable body 20 decreases. The gaze direction of the user 30 thus shifts downward. The user 30 can view the first image 51 viewable at a more downward position without moving the gaze greatly.

The controller 5 can obtain, in addition to information about the speed of the movable body 20, positional information about the left eye 311 and the right eye 31r of the user 30 from the second input unit 14. The controller 5 may drive the drive 8 in accordance with the speed of the movable body 20 and the positional information about the left eye 311 and the right eye 31r of the user 30 in the height direction. The positions of the left eye 311 and the right eye 31r of the user 30 in the height direction change depending on, for example, the sitting height or the sitting posture of the user 30, or the settings of the seat. The controller 5 obtains positional information about the left eye 311 and the right eye 31r of the user in the height direction to display the first image at a more appropriate position in the depth direction from the reflective optical element 4 as viewed from the user 30.

The controller 5 drives the drive 8 in accordance with the height of the eyes of the user 30 included in the positional information about the left eye 311 and the right eye 31r of the user 30 to change the lower limit angle of the direction in which image light is reflected. Depending on the height of the left eye 311 and the right eye 31r of the user 30, a lower portion of the reflective optical element 4 may be hidden by, for example, an upper portion of the instrument panel and thus be partially unviewable to the user 30. The controller 5 may set the lower limit for the direction in which image light is reflected to prevent the first image 51 from appearing in an area unviewable to the user 30.

The controller 5 may change, in accordance with the height of the eyes of the user 30 included in the positional information about the left eye 311 and the right eye 31r, the amount of change in the direction in which image light is reflected in response to a change in the speed of the movable body 20, and drive the drive 8. The windshield used as the reflective optical element 4 in the movable body 20 being a vehicle has a curved surface. The controller 5 may thus control the drive 8 to change the position at which the first image appears in accordance with a change in speed based on the direction in which image light is reflected by the curved reflective optical element 4.

For the HUD system 1 to display a 3D image, the controller 5 may change the parallax amount for a parallax image to appear on the first display panel 11 in accordance with the speed of the movable body 20. Changing the parallax amount for a parallax image causes the HUD system 1 to display a 3D image perceivable as appearing more away from or closer to the position of the first virtual image V1 as viewed from the user 30. The user 30 is more likely to direct the gaze at a more distant point as the speed of the movable body 20 increases. Thus, the controller 5 may decrease the parallax of the parallax image to be displayed on the first display panel 11. Conversely, the user 30 is more likely to direct the gaze at a closer point as the speed of the movable body 20 decreases. Thus, the controller 5 may increase the parallax of the parallax image to be displayed on the first display panel 11.

As described above, the HUD system 1 can display an image at an appropriate position in accordance with the speed of the movable body 20.

Head-Up Display for Displaying Multiple Images

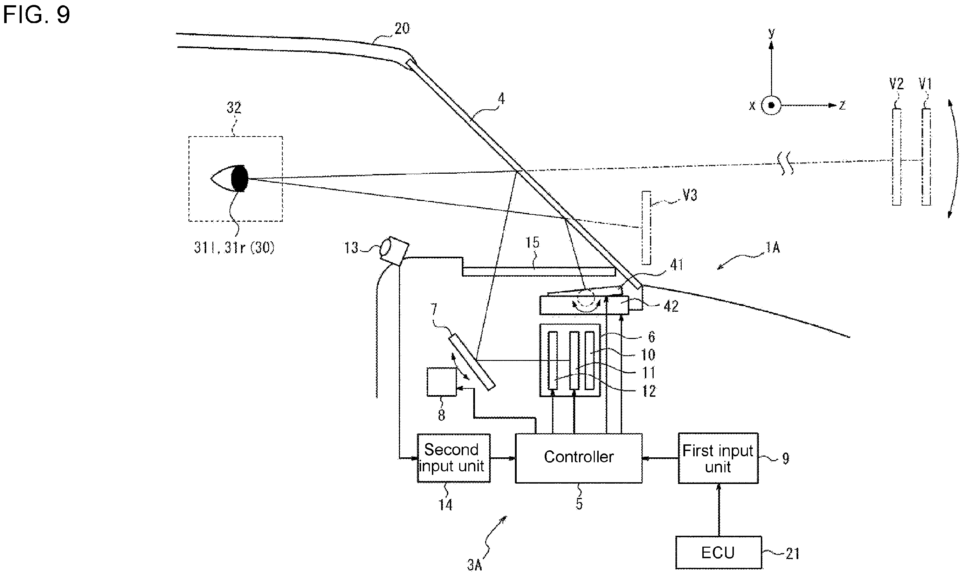

FIG. 9 shows a HUD system 1A according to one or more embodiments of the present disclosure that can display multiple images. The HUD system 1A includes a HUD module 3A and the reflective optical element 4. The HUD module 3A in the HUD system 1A includes a second display panel 41 in addition to the components of the HUD module 3 shown in FIG. 1. The reflective optical element 4 reflects, toward the user 30, image light from a second image emitted from the second display panel 41 in addition to image light from the first image reflected by the mirror 7. This causes both the images displayed on the first display panel 11 and the second display panel 41 to be projected as virtual images viewable in the field of view of the user 30. The image displayed on the second display panel 41 is viewed as a third virtual image V3 by the user 30.

The HUD module 3A may further include a stage 42 on which the second display panel 41 is mountable. The stage 42 can move or orient the second display panel 41 with respect to the reflective optical element 4. The controller 5 can drive the stage 42. The HUD module 3A can thus change the position at which the second image is projected on the reflective optical element 4.

The HUD system 1 can selectively use the first display panel 11 or the second display panel 41 in accordance with the image to be displayed. For example, the first image displayed by the first display panel 11 may be an image displayable in a manner superimposed on the background frontward from the reflective optical element 4. The second image displayed by the second display panel 41 includes an image displayable at a fixed position. For example, the first image can be displayed in the first reflective area 4a in the reflective optical element 4. The second image can at least partially be displayed in the second reflective area 4b in the reflective optical element 4.

When storing multiple display items to be displayed, the controller 5 displays any of the display items selectively on the first display panel 11 or the second display panel 41 in accordance with the speed of the movable body 20. For example, the controller 5 can display all the display items on the first display panel 11 in response to the speed of the movable body 20 being a predetermined value or greater. The controller 5 can display at least one display item on the second display panel 41 in response to the speed of the movable body 20 being less than the predetermined value.

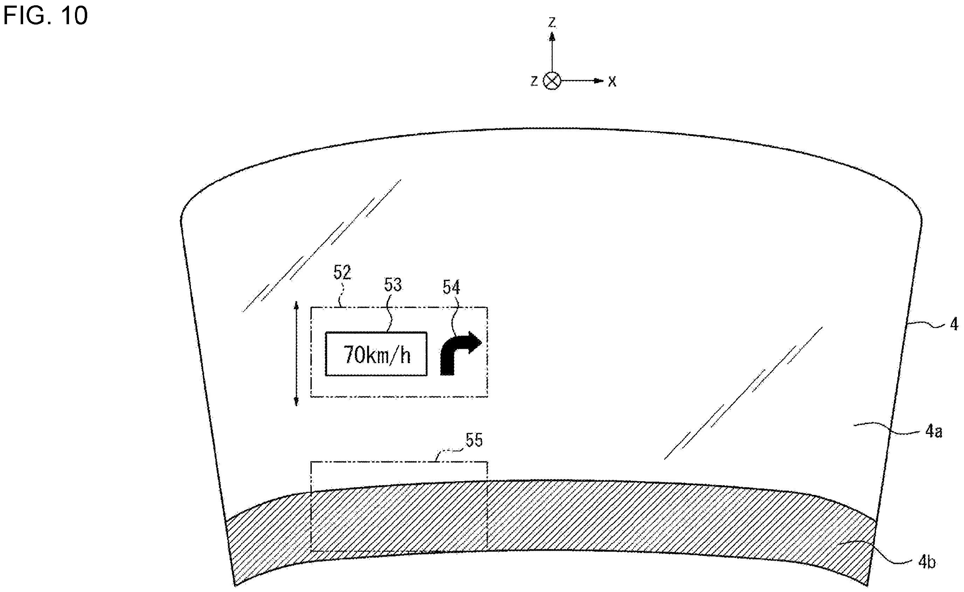

FIG. 10 shows an example image displayed by the HUD system 1A when the speed of the movable body 20 is a predetermined value or greater. Any speed may be determined as the predetermined value. The predetermined value may be, for example, 10 km/h, 30 km/h, or 50 km/h, or any other speed. A first display item 53 and a second display item 54 are displayed in the first image display area 52 in FIG. 10. The first image display area 52 is an area on the reflective optical element 4 onto which the first image displayed on the first display panel 11 as described above can be projected. FIG. 10 shows, in addition to the first image display area 52, a second image display area 55 that is an area on the reflective optical element 4 onto which the second image displayed on the second display panel 41 can be projected. The first display item 53 and the second display item 54 are individual display targets displayed by the HUD system 1 under control by the controller 5. For the multiple display items 53 and 54, the controller 5 can generate an image containing the display items 53 and 54 and display the image on the first display panel 11. In FIG. 10, the first display item 53 and the second display item 54 are displayed as the first image on the first image display area 52. In this manner, the first display item 53 and the second display item 54 can appear in a direction near the gaze direction of the user 30 while the movable body 20 is travelling at high speed.

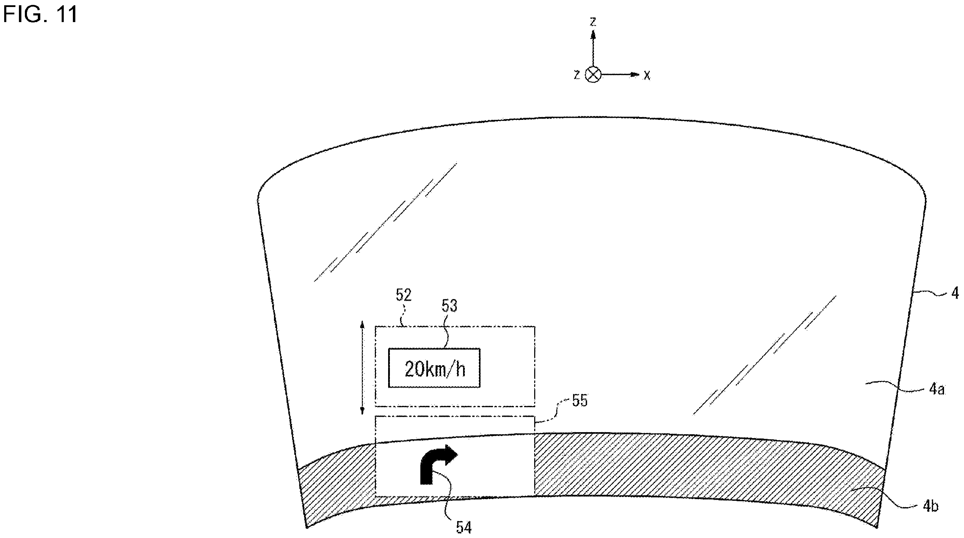

FIG. 11 shows an example image displayed by the HUD system 1A when the speed of the movable body 20 is less than the predetermined value. The controller 5 causes the first attendance diagnostic image display area 52 to be at a position lower than the position in FIG. 10 as the speed of the movable body 20 decreases. The first display item 53 appears on the first image display area 52. The second display item 54 appears on the second image display area 55. In this case, the first display item 53 is the first image. The second display item 54 is the second image. The second display item 54 may be in the second reflective area 4b in the reflective optical element 4. In this manner, the first display item 53 and the second display item 54 can appear in a direction near the gaze direction of the user 30 while the movable body 20 is travelling at low speed. The second display item 54 appearing in the second reflective area 4b is defined and easily viewable.

Although the above embodiments are described as typical examples, various modifications and substitutions to the embodiments are apparent to those skilled in the art without departing from the spirit and scope of the present disclosure. Thus, the above embodiments should not be construed to be restrictive, but may be variously modified or altered within the scope of the present disclosure. For example, multiple structural blocks described in the above embodiments or examples may be combined into a structural block, or each structural block may be divided. The embodiments of the present disclosure can also be implemented as a method or a program implementable by a processor included in the device, or as a storage medium storing the program. These method, program, and storage medium also fall within the scope of the present disclosure.

In one or more embodiments of the present disclosure, the HUD module includes a liquid crystal shutter as a parallax optical element. The parallax optical element is not limited to a liquid crystal shutter but may be another optical element that can substantially define the viewing zone for the parallax image. For example, the parallax optical element may be a parallax barrier plate with slits that are arranged parallel to one another. The slits allow transmission of the right eye image in the parallax image along the optical path toward the right eye and the left eye image toward the left eye. For the parallax optical element being the parallax barrier with fixed openings as described above, the controller may switch, based on the movement of the head of the user, between subpixels displaying the left eye image and subpixels displaying the right eye image on the second display panel. In this manner, the controller can continue displaying a 3D image for the user independently of any displacements of the eyes of the user.

The parallax optical element may be an optical component including multiple lenticular lenses arranged parallel to one another in a flat surface. The lenticular lenses can deflect the left eye image and the right eye image in the parallax image alternately displayed on the second display panel respectively to the optical path toward the right eye and the optical path toward the left eye.

The present disclosure may be implemented in the following forms.

A head-up display module according to one or more embodiments of the present disclosure is mountable on a movable body. The head-up display module includes a first display panel, a first optical element, a drive, a first input unit, and a controller. The first display panel displays a first image. The first optical element reflects image light from the first image emitted from the first display panel. The drive drives the first optical element to change a direction in which the image light from the first image is reflected. The first input unit receives an input of a speed of the movable body. The controller drives the drive in accordance with the speed and controls a display image to be displayed on the first display panel.

A head-up display system according to one or more embodiments of the present disclosure includes a head-up display module and a second optical element. The head-up display module is mountable on a movable body. The head-up display module includes a first display panel, a first optical element, a drive, a first input unit, and a controller. The first display panel displays a first image. The first optical element reflects image light from the first image emitted from the first display panel. The drive drives the first optical element to change a direction in which the image light from the first image is reflected. The first input unit receives an input of a speed of the movable body. The controller drives the drive in accordance with the speed and controls a display image to be displayed on the first display panel. The second optical element reflects, toward a user, the image light from the first image reflected by the first optical element.

A head-up display system according to one or more embodiments of the present disclosure includes a head-up display module mountable on a movable body and a second optical element. The head-up display module includes a first display panel, a first optical element, a drive, a first input unit, a controller, and a second display panel. The first display panel displays a first image. The first optical element reflects image light from the first image emitted from the first display panel. The drive drives the first optical element to change a direction in which the image light from the first image is reflected. The first input unit receives an input of a speed of the movable body. The controller drives the drive in accordance with the speed and controls a display image to be displayed on the first display panel. The controller stores a plurality of display items to be displayed, displays at least one of the plurality of display items on the second display panel in response to the speed being less than a predetermined value, and displays all of the plurality of display items on the first display panel in response to the speed being greater than or equal to the predetermined value. The second optical element reflects, toward a user, the image light from the first image reflected by the first optical element and image light from a second image emitted from the second display panel.

A movable body according to one or more embodiments of the present disclosure includes a head-up display system. The head-up display system includes a head-up display module and a second optical element. The head-up display module includes a first display panel, a first optical element, a drive, a first input unit, and a controller. The first display panel displays a first image. The first optical element reflects image light from the first image emitted from the first display panel. The drive drives the first optical element to change a direction in which the image light from the first image is reflected. The first input unit receives an input of a speed. The controller drives the drive in accordance with the speed and controls a display image to be displayed on the first display panel. The second optical element reflects, toward a user, the image light from the first image reflected by the first optical element.

The head-up display module, the head-up display system, and the movable body incorporating the head-up display module and the head-up display system according to one or more embodiments of the present disclosure can display an image at an appropriate position in accordance with the speed of the movable body.

Although embodiments of the present disclosure have been described in detail, the present disclosure is not limited to the embodiments described above, and may be changed or modified in various manners without departing from the spirit and scope of the present disclosure. The components described in the above embodiments may be entirely or partially combined as appropriate unless any contradiction arises.

Reference Signs List

| | |
|---|---|
| 1, 1A | head-up display system (HUD system) |
| 3, 3A | head-up display module (HUD module) |
| 4 | reflective optical element (second optical element) |
| 4a | first reflective area |
| 4b | second reflective area |
| 5 | controller |
| 6 | display device |
| 7 | mirror (first optical element) |
| 8 | drive |
| 9 | first input unit |
| 10 | illuminator |
| 11 | first display panel |
| 12 | parallax optical element |
| 13 | detector |
| 14 | second input unit |
| 15 | glass cover |
| 20 | movable body |
| 21 | electronic control unit (ECU) |
| 30 | user |
| 31L | left eye |
| 31R | right eye |
| 32 | viewing zone |
| 41 | second display panel |
| 42 | stage |
| 51 | first image |
| 52 | first image display area |
| 53 | first display item |
| 54 | second display item |
| 55 | second image display area |
| A | active area |
| P | pixel |
| Pg | subpixel group |
| V1 | first virtual image |
| V2 | second virtual image |
| V3 | third virtual image |
| VaL | left viewable area |
| VbL | left light-reducing area |
| VaR | right viewable area |
| VbR | right light-reducing area |

**Claims**

**1.** A head-up display module mountable on a movable body, the head-up display module comprising:

a first display panel configured to display a first image;
a first optical element configured to reflect image light from the first image emitted from the first display panel;
a drive configured to drive the first optical element to change a direction in which the image light from the first image is reflected;
a first input unit configured to receive an input of a speed of the movable body; and
a controller configured to drive the drive in accordance with the speed and control a display image to be displayed on the first display panel.

2. The head-up display module according to claim 1, wherein
the controller controls the drive to cause the first optical element to reflect the image light more upward as the speed increases.

3. The head-up display module according to claim 1 or claim 2, wherein
the controller controls the drive to cause the first optical element to reflect the image light less upward as the speed decreases.

4. The head-up display module according to any one of claims 1 to 3, further comprising:

a second input unit configured to obtain positional information about a position of an eye of a user,
wherein the controller drives the drive in accordance with the speed and the positional information.

5. The head-up display module according to claim 4, wherein
the controller drives the drive in accordance with a height of the eye of the user included in the positional information to change a lower limit angle of the direction in which the image light is reflected.

6. The head-up display module according to claim 4 or claim 5, wherein
the controller drives the drive in accordance with a height of the eye of the user included in the positional information to change an upper limit angle of the direction in which the image light is reflected.

7. The head-up display module according to any one of claims 4 to 6, wherein
the controller drives the drive in accordance with a height of the eye of the user included in the positional information and the speed.

8. The head-up display module according to any one of claims 4 to 7, wherein
the controller changes, in accordance with a height of the eye of the user included in the positional information, an amount of change in the direction in which the image light is reflected in response to a change in the speed, and drives the drive.

9. The head-up display module according to any one of claims 1 to 8, further comprising:

a parallax optical element,
wherein the first display panel displays a parallax image as the first image,
the parallax optical element defines a traveling direction of image light from the parallax image to substantially define a viewing zone for the first image, and
the controller changes a parallax amount for the parallax image to be displayed on the first display panel in accordance with the speed.

10. A head-up display system, comprising:

a head-up display module mountable on a movable body, the head-up display module including

a first display panel configured to display a first image,
a first optical element configured to reflect image light from the first image emitted from the first display panel,
a drive configured to drive the first optical element to change a direction in which the image light from the first image is reflected,
a first input unit configured to receive an input of a speed of the movable body, and
a controller configured to drive the drive in accordance with the speed and control a display image to be displayed on the first display panel; and

a second optical element configured to reflect, toward a user, the image light from the first image reflected by the first optical element.

11. The head-up display module according to any one of claims 1 to 9, further comprising:

a second display panel,
wherein the controller stores a plurality of display items to be displayed, displays at least one of the plurality of display items on the second display panel in response to the speed being less than a predetermined value, and displays all of the plurality of display items on the first display panel in response to the speed being greater than or equal to the predetermined value.

12. A head-up display system, comprising:

a head-up display module mountable on a movable body, the head-up display module including

a first display panel configured to display a first image,
a first optical element configured to reflect image light from the first image emitted from the first display panel,
a drive configured to drive the first optical element to change a direction in which the image light from the first image is reflected,
a first input unit configured to receive an input of a speed of the movable body,
a controller configured to drive the drive in accordance with the speed and control a display image to be displayed on the first display panel, and
a second display panel,
wherein the controller stores a plurality of display items to be displayed, displays at least one of the plurality of display items on the second display panel in response to the speed being less than a predetermined value, and displays all of the plurality of display items on the first display panel in response to the speed being greater than or equal to the predetermined value; and

a second optical element configured to reflect, toward a user, the image light from the first image reflected by the first optical element and image light from a second image emitted from the second display panel.

13. A movable body, comprising:
a head-up display system including

a head-up display module including

a first display panel configured to display a first image,
a first optical element configured to reflect image light from the first image emitted from the first display panel,
a drive configured to drive the first optical element to change a direction in which the image light from the first image is reflected,
a first input unit configured to receive an input of a speed, and
a controller configured to drive the drive in accordance with the speed and control a display image to be displayed on the first display panel, and

a second optical element configured to reflect, toward a user, the image light from the first image reflected by the first optical element.

FIG. 1

EP 4 067 148 A1

FIG. 2

15

FIG. 3

EP 4 067 148 A1

FIG. 4

FIG. 5

EP 4 067 148 A1

FIG. 6

V1

y
z ⊗ → x

| | | | | | | P7 | P8 | P9 | P10 | P11 | P12 | | | | | | | P7 | P8 | P9 | P10 | P11 | P12 |
|---|---|---|---|---|---|---|---|---|---|---|---|---|---|---|---|---|---|---|---|---|---|---|---|
| P12 | | | | | | | P7 | P8 | P9 | P10 | P11 | P12 | | | | | | | P7 | P8 | P9 | P10 | P11 |
| P11 | P12 | | | | | | | P7 | P8 | P9 | P10 | P11 | P12 | | | | | | | P7 | P8 | P9 | P10 |
| P10 | P11 | P12 | | | | | | | P7 | P8 | P9 | P10 | P11 | P12 | | | | | | | P7 | P8 | P9 |
| P9 | P10 | P11 | P12 | | | | | | | P7 | P8 | P9 | P10 | P11 | P12 | | | | | | | P7 | P8 |
| P8 | P9 | P10 | P11 | P12 | | | | | | | P7 | P8 | P9 | P10 | P11 | P12 | | | | | | | P7 |
| P7 | P8 | P9 | P10 | P11 | P12 | | | | | | | P7 | P8 | P9 | P10 | P11 | P12 | | | | | | |

VaR   VbR   VaR   VbR

FIG. 7

Movement direction of parallax optical element

EP 4 067 148 A1

FIG. 8

EP 4 067 148 A1

FIG. 9

EP 4 067 148 A1

FIG. 10

4
4a
4b

52
53
54
55

70km/h

Z
X
Y

EP 4 067 148 A1

FIG. 11

**EP 4 067 148 A1**

<table>
<tr><td colspan="2"><b>INTERNATIONAL SEARCH REPORT</b></td><td colspan="2">International application No.<br>PCT/JP2020/042681</td></tr>
</table>

| A. CLASSIFICATION OF SUBJECT MATTER |
|---|
| B60K 35/00(2006.01)i; G02B 27/01(2006.01)i; G02B 30/00(2020.01)i; H04N 13/128(2018.01)i; H04N 13/305(2018.01)i; H04N 13/31(2018.01)i; H04N 13/346(2018.01)i; H04N 13/363(2018.01)i; H04N 13/366(2018.01)i<br>FI:  G02B27/01; G02B30/00; B60K35/00 A; H04N13/366; H04N13/346; H04N13/31; H04N13/305; H04N13/128; H04N13/363 |
| According to International Patent Classification (IPC) or to both national classification and IPC |

| B. FIELDS SEARCHED |
|---|
| Minimum documentation searched (classification system followed by classification symbols)<br>B60K35/00; G02B27/01; G02B30/00; H04N13/128; H04N13/305; H04N13/31; H04N13/346; H04N13/363; H04N13/366 |

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

| Electronic data base consulted during the international search (name of data base and, where practicable, search terms used) |
|---|
| |

| C. DOCUMENTS CONSIDERED TO BE RELEVANT | | |
|---|---|---|
| Category* | Citation of document, with indication, where appropriate, of the relevant passages | Relevant to claim No. |
| X | JP 2019-59248 A (MAXELL, LTD.) 18 April 2019 (2019-04-18) paragraphs [0021]-[0060], [0137]-[0145], fig. 1-10, 36, 67 | 1, 4-8, 10, 13 |
| Y | paragraphs [0021]-[0060], [0137]-[0145], fig. 1-10, 36, 67 | 2-3, 11-12 |
| A | paragraphs [0021]-[0060], [0137]-[0145], fig. 1-10, 36, 67 | 9 |
| Y | WO 2017/221945 A1 (KYOCERA CORP.) 28 December 2017 (2017-12-28) paragraphs [0022]-[0032], fig. 1 | 2-3 |
| Y | WO 2018/117012 A1 (MAXELL, LTD.) 28 June 2018 (2018-06-28) paragraphs [0011], [0021], [0051]-[0052], fig. 4, 9 | 11-12 |

☒ Further documents are listed in the continuation of Box C.  ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more such documents, such combination being obvious to a person skilled in the art<br>"&" document member of the same patent family |

| Date of the actual completion of the international search<br>15 December 2020 (15.12.2020) | Date of mailing of the international search report<br>12 January 2021 (12.01.2021) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

INTERNATIONAL SEARCH REPORT

International application No.

PCT/JP2020/042681

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2007-145310 A (DENSO CORP.) 14 June 2007 (2007-06-14) paragraphs [0018], [0046] | 11-12 |
| Y | JP 2019-79238 A (MAXELL, LTD.) 23 May 2019 (2019-05-23) paragraphs [0013]-[0024], [0091], fig. 2 | 11-12 |
| A | JP 2015-194709 A (PANASONIC IP MANAGEMENT CO., LTD.) 05 November 2015 (2015-11-05) paragraphs [0010]-[0029], fig. 1-2 | 9 |
| A | US 2017/0187963 A1 (LG ELECTRONICS INC.) 29 June 2017 (2017-06-29) paragraphs [0042]-[0139], fig. 1-13B | 1-13 |

Form PCT/ISA/210 (continuation of second sheet) (January 2015)

| International application No. |
| --- |
| PCT/JP2020/042681 |

| Patent Documents referred in the Report | Publication Date | Patent Family | Publication Date |
| --- | --- | --- | --- |
| JP 2019-59248 A | 18 Apr. 2019 | US 2019/025580 A1 paragraphs [0066]-[0105], fig. 1-10 CN 108473054 A WO 2017/134861 A1 | |
| WO 2017/221945 A1 | 28 Dec. 2017 | US 2019/0191131 A1 paragraphs [0075]-[0087], fig. 1 EP 3474268 A1 | |
| WO 2018/117012 A1 | 28 Jun. 2018 | US 2019/0235240 A1 paragraphs [0029], [0039], [0069]-[0070], fig. 4, 9 CN 109891300 A | |
| JP 2007-145310 A | 14 Jun. 2007 | (Family: none) | |
| JP 2019-79238 A | 23 May 2019 | US 2020/0247240 A1 paragraphs [0035]-[0046], [0112], fig. 2 CN 111213114 A WO 2019/082626 A1 | |
| JP 2015-194709 A | 05 Nov. 2015 | US 2016/0173867 A1 paragraphs [0014]-[0028], fig. 1-2 WO 2015/146042 A1 EP 3125017 A1 | |
| US 2017/0187963 A1 | 29 Jun. 2017 | EP 3184365 A2 KR 10-2017-0076395 A CN 106915302 A | |

Form PCT/ISA/210 (patent family annex) (January 2015)

**REFERENCES CITED IN THE DESCRIPTION**

**Patent documents cited in the description**

- JP 2017202721 A